# EUROPÄISCHE PATENTSCHRIFT

(11) **EP 1 723 396 B1**
(45) Veröffentlichungstag und Bekanntmachung des Hinweises auf die Patenterteilung: **30.01.2008**
(21) Anmeldenummer: 05707906.3
(22) Anmeldetag: 01.02.2005
(51) Int. Cl.: G01D 21/02

(54) **VERFAHREN ZUM ERKENNEN EINES SENSORTYPS**
METHOD FOR RECOGNIZING A SENSOR TYPE
PROCEDE POUR IDENTIFIER UN TYPE DE CAPTEUR

(30) Priorität: 10.03.2004 DE 102004011698
(43) Veröffentlichungstag der Anmeldung: 22.11.2006
(73) Patentinhaber: Siemens VDO Automotive AG, 93055 Regensburg (DE)
(72) Erfinder: CRAEMER, Ulrich, 29221 Celle (DE); WOLPERT, Hartmut, 93197 Zeitlarn (DE); ZOBEL, Christian, 93195 Wolfsegg (DE)
(86) Internationale Anmeldenummer: PCT/EP2005/050426
(87) Internationale Veröffentlichungsnummer: WO 2005/088261

(56) Entgegenhaltungen:
- EP-A- 0 985 915
- DE-A1- 19 907 950
- US-A- 6 115 654

## Beschreibung

Die Erfindung betrifft ein Verfahren zum Erkennen eines Sensortyps. Technische Vorrichtungen, insbesondere Kraftfahrzeuge, weisen eine große Anzahl und eine ständig zunehmende Anzahl an Sensoren auf, deren Messsignale in einer oder mehreren Steuereinrichtungen ausgewertet werden.

Ein derartiges Verfahren zum Erkennen eines Sensortyps ist aus der Patentschrift EP 0985915 bekannt.

Die Anzahl der Eingänge der Steuereinrichtungen, über die beispielsweise der Verlauf des von dem jeweiligen Sensor erzeugten Messsignal erfasst werden kann und mittels eines Analog/Digital-Wandler abgetastet werden kann, ist jedoch begrenzt. Zum Erhöhen der möglichen Anzahl an erfassten Messsignalen sind Multiplexer bekannt, die beispielsweise die Messsignale zweier Sensoren zeitlich multiplexen und die dann über einen Eingang und einem diesen zugeordneten Analog/Digital-Wandler abgetastet werden können und dann gegebenenfalls digital demultiplext werden.

Eine Möglichkeit des Multiplexens bei analogen Sensormesssignalen ist, den Messsignalen zweier Sensoren, beispielsweise eines Kraftstofftemperatursensors und eines Kraftstoffqualitätssensors, verschiedene Signalwertebereiche zuzuordnen.

Die Aufgabe der Erfindung ist es, ein Verfahren zu schaffen, mittels dessen einfach ein Sensortyp erkannt werden kann.

Die Aufgabe wird gelöst durch die Merkmale des unabhängigen Patentanspruchs. Vorteilhafte Ausgestaltungen der Erfindung sind in den Unteransprüchen gekennzeichnet.

Die Erfindung zeichnet sich aus durch ein Verfahren zum Erkennen eines Sensortyps mit folgenden Schritten. Eine erste Bedingung wird geprüft, die erfüllt ist, wenn ein Messsignal eines Sensors einen ersten Schwellenwert durchkreuzt. Eine zweite Bedingung wird geprüft, wenn die erste Bedingung erfüllt ist. Die zweite Bedingung ist erfüllt, wenn ein Gradient des Messsignals betragsmäßig größer ist als ein vorgegebener zweiter Schwellenwert. Wenn sowohl die erste als auch die zweite Bedingung erfüllt sind, wird auf einen Sensor mit einem Signalwertebereich-Multiplexausgang für das Messsignal erkannt. Wenn mindestens eine der Bedingungen nicht erfüllt ist, wird auf einen Sensor ohne Signalwertebereich-Multiplexausgang für das Messsignal erkannt.

Auf diese Weise ist ein sicheres Erkennen des jeweiligen Sensortyps ohne zusätzlich dafür notwendige Hardware möglich.

In einer vorteilhaften Ausgestaltung der Erfindung werden jeweils die erste und zweite Bedingung zeitnah zu einer Aufnahme des Betriebs des Sensors geprüft. Auf diese Weise kann sichergestellt werden, dass zeitnah zu der Aufnahme des Betriebs des Sensors bereits eine korrekte Zuordnung des Messsignals erfolgt.

Einer weiteren vorteilhaften Ausgestaltung der Erfindung wird auf den Sensor mit dem Signalwertebereich-Multiplexausgang für das Messsignal erkannt, wenn die erste und zweite Bedingung eine vorgegebene Anzahl mal erfüllt sind und zwar bevorzugt innerhalb einer vorgebbaren Zeitdauer. Ansonsten wird auf den Sensor ohne Signalwertebereich-Multiplexausgang für das Messsignal erkannt. Auf diese Weise kann ein äußerst zuverlässiges Erkennen des Sensortyps gewährleistet werden.

In einer weiteren vorteilhaften Ausgestaltung der Erfindung werden bei einem erkannten Sensor mit Signalwertebereich-Multiplexausgang folgende Schritte durchgeführt. Die erste und abhängig davon die zweite Bedingung werden geprüft. Ein Messwert des Messsignals, der eine vorgegebene Zeitdauer vor dem Erfülltsein der ersten und zweiten Bedingung erfasst wurde, wird entweder einer ersten oder zweiten Messgröße zugeordnet, und zwar abhängig von dem Vorzeichen des Gradienten des Messsignals oder abhängig von dem Absolutwert des Messwertes. Auf diese Weise kann eine hohe Güte beim Erfassen der Messgröße gewährleistet werden, insbesondere wenn ein Tiefpassfilter vorhanden ist.

In einer weiteren vorteilhaften Ausgestaltung der Erfindung wird ein Fehler erkannt, wenn die ersten und zweiten Bedingungen während einer vorgebbaren Zeitdauer nicht erfüllt sind. Auf diese Weise kann einfach gewährleistet werden, dass nicht gegebenenfalls zeitlich veraltete Messwerte einer weiteren Messwertverarbeitung zugrundegelegt werden.

Ausführungsbeispiele der Erfindung sind im Folgenden anhand der schematischen Zeichnungen erläutert. Es zeigen:

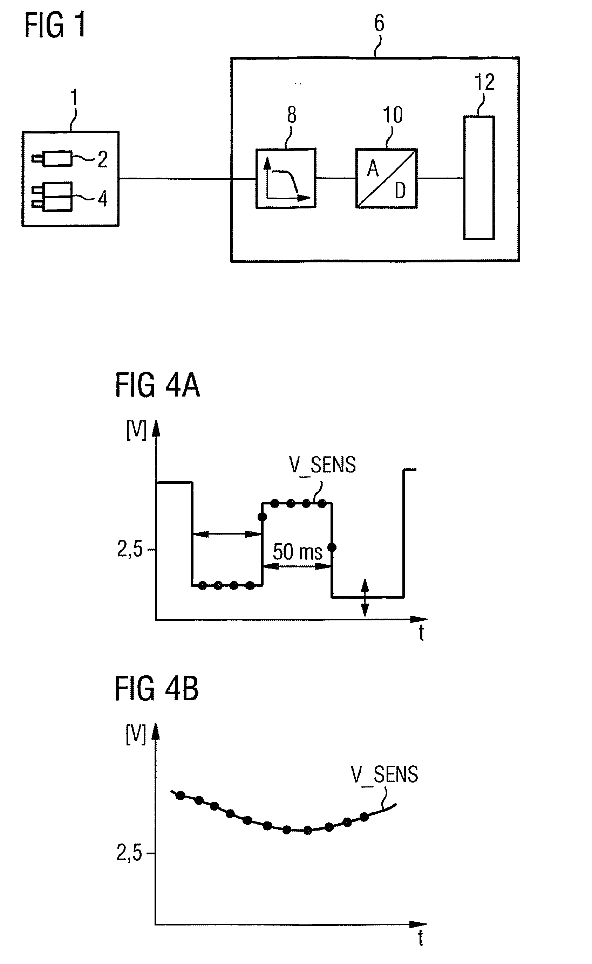

- Figur 1: eine Anordnung eines Sensors 1 und einer Steuereinrichtung 6,
- Figur 2: ein Ablaufdiagramm eines Programms zum Erkennen eines Sensortyps und
- Figur 3: ein weiteres Ablaufdiagramm eines Programms, das abhängig von einem erkannten Sensortyp Messwerte zuordnet.
- Figur 4a: ein zeitlicher Verlauf eines Messsignals mit Signalwertebereich-Multiplexausgang.
- Figur 4b: ein zeitlicher Verlauf eines Messsignals ohne Signalwertebereich-Multiplexausgang.

Elemente gleicher Konstruktion oder Funktion sind figurenübergreifend mit den gleichen Bezugszeichen versehen.

Ein Sensor 1 kann ein Sensor 2 ohne einen Signalwertebereich-Multiplexausgang oder auch ein Sensor 4 mit einem Signalwertebereich-Multiplexausgang sein. Anhand der Figur 4a ist beispielhaft ein zeitlicher Verlauf eines Messsignals V_SENS dargestellt für den Sensor 4 mit Signalwertebereich-Multiplexausgang. In Figur 4b ist der zeitliche Verlauf des Messsignals V_SENS des Sensors 2 ohne Signalwertebereich-Multiplexausgang dargestellt. Wobei jeweils die Abszisse die Zeit t ist und die Ordinate eine Spannung U ist.

Der Sensor 1 kann ein beliebiger Sensor sein, bevorzugt ist er ein Kraftstofftemperatursensor und/oder einen Kraftstoffqualitätssensor. Der Sensor 2 ohne Signalwertebereich-Multiplexausgang ist z.B. entweder der Kraftstofftemperatursensor oder der Kraftstoffqualitätssensor. Der Sensor 4 mit Signalwertebereich-Multiplexausgang ist bevorzugt sowohl der Kraftstofftemperatursensor als auch der Kraftstoffqualitätssensor. Das Messprinzip des Kraftstofftemperatursensors ist bevorzugt ein Widerstandsmessprinzip, während das Messprinzip des Kraftstoffqualitätssensors bevorzugt ein kapazitives Messprinzip ist.

Der Sensor 1 ist mit einer Steuereinrichtung 6 derart gekoppelt, dass das Messsignal V_SENS zu der Steuereinrichtung 6 übertragen wird. Bevorzugt ist der Sensor 1 elektrisch leitend mit der Sensoreinrichtung 6 verbunden.

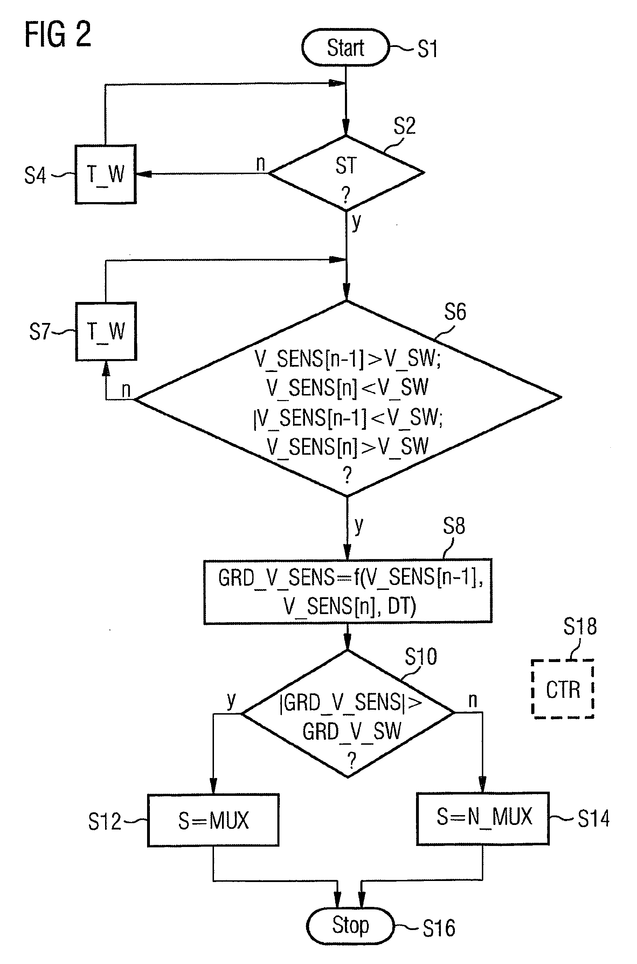

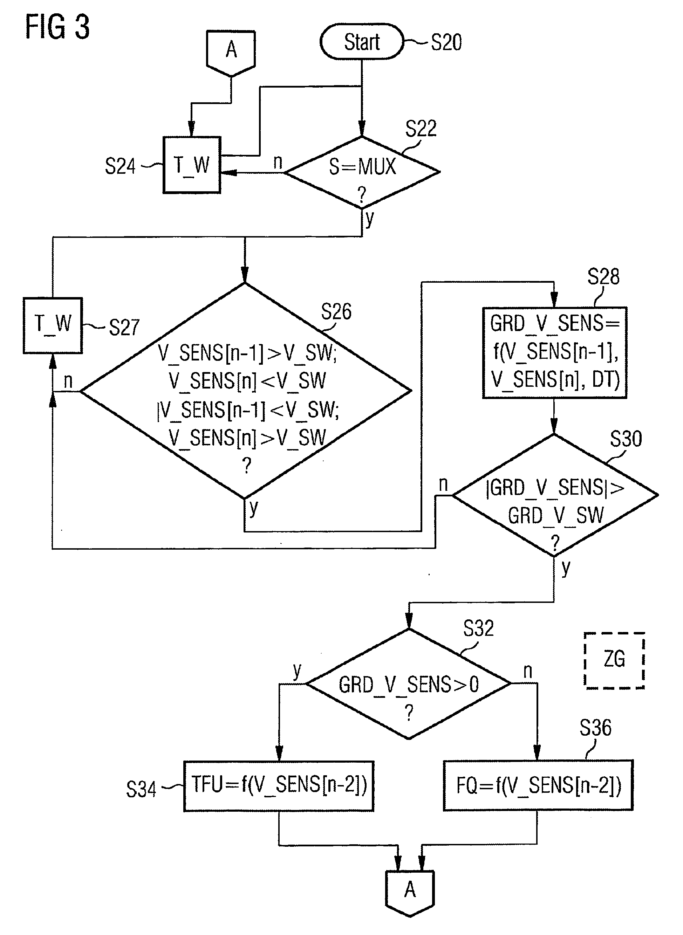

Das Messsignal V_SENS des Sensors 1 wird eingangsseitig der Steuereinrichtung 6 bevorzugt mittels eines Tiefpasses 8 gefiltert. Das gefilterte Messsignal wird anschließend in einem Analog/Digital-Wandler 10 bei jedem Abtastzeitpunkt in einen digitalen Messwert gewandelt. Anschließend erfolgt eine Verarbeitung des Messsignals in der Verarbeitungseinheit 12. In der Verarbeitungseinheit 12 werden zu diesem Zwecke Programme abgearbeitet, die im Folgenden anhand der Figuren 2 und 3 näher erläutert sind.

Ein Programm zum Erkennen eines Sensortyps (Figur 2) wird in einem Schritt S1 gestartet, in dem gegebenenfalls Variablen initialisiert werden. Der Start des Programms erfolgt bevorzugt zeitnah zu einem Beginn des Betriebs des Sensors 1. Im Falle eines Sensors, der der Steuereinrichtung 6 zugeordnet ist, wenn diese Steuereinrichtung 6 zum Steuern einer Brennkraftmaschine eines Kraftfahrzeugs vorgesehen ist, wird dann in einem Schritt S2 geprüft, ob ein Start ST der Brennkraftmaschine gerade erfolgt ist. Dies kann z.B. erfolgen durch Auswerten eines Startsignals, das beispielsweise beim Betätigen eines Zündschlüssels erzeugt wird. Ist die Bedingung des Schrittes S2 nicht erfüllt, so verharrt das Programm in einem Schritt S4 für eine vorgegebene Wartezeitdauer T_W, bevor die Bedingung des Schrittes S2 erneut geprüft wird. Alternativ kann das Programm dann auch beendet werden.

Ist die Bedingung des Schrittes S2 hingegen erfüllt, so wird in einem Schritt S6 geprüft, ob das Messsignal V_SENS [n-1] des vorangegangenen Abtastzeitpunktes größer ist als ein erster Schwellenwert. Bevorzugt hat das Messsignal V_SENS einen Wertebereich von 0 bis 5 V. Der erste Schwellenwert V_SW hat beispielsweise den Wert 2,5 V. Ein Term in eckigen Klammern bezeichnet immer den jeweiligen Abtastzeitpunkt. So bezeichnet n den aktuellen Abtastzeitpunkt, n-1 den um eine Abtastperiode DT zurückliegenden Abtastzeitpunkt und n-2 einen um zwei Abtastperioden DT zurückliegenden Abtastzeitpunkt.

Ferner wird auch geprüft, ob das aktuelle Messsignal V_SENS [n] kleiner ist als der erste Schwellenwert V_SW. Ist beides der Fall, so ist die Bedingung des Schrittes S6 erfüllt, die im Folgenden auch als erste Bedingung bezeichnet wird. Zusätzlich wird in dem Schritt S6 geprüft, ob das in der vorangegangenen Abtastperiode abgetastete Messsignal V_SENS [n-1] kleiner ist als der erste Schwellenwert V_SW und ob das aktuelle Messsignal V_SENS [n] größer ist als der erste Schwellenwert V_SW. Auch wenn dies erfüllt ist, ist die erste Bedingung erfüllt.

Ist die Bedingung des Schrittes S6 nicht erfüllt, so wird die Bearbeitung in einem Schritt S7 fortgesetzt, in dem das Programm für die vorgegebene Wartezeitdauer T_W verharrt, bevor die Bedingung des Schrittes S6 erneut geprüft wird. Gegebenenfalls kann auch vorgesehen sein, das Programm in einem Schritt S14 fortzusetzen, wenn die Bedingung des Schrittes S6 eine vorgebbare Anzahl mal nicht erfüllt ist. Diese vorgebbare Anzahl ist vorteilhaft so gewählt, dass bei einem Sensor mit Signalwertebereich-Multiplexausgang innerhalb der Zeitdauer, die sich aus der Multiplikation der vorgegebenen Anzahl mit der vorgegebenen Wartezeitdauer T_W ergibt, mindestens einmal die Bedingung des Schrittes S6 erfüllt ist.

Ist die Bedingung des Schrittes S6 hingegen erfüllt, so wird in einem Schritt S8 ein Gradient GRD_V_SENS des Messsignals V_SENS ermittelt. Dies erfolgt abhängig von dem bei der vorangegangenen Abtastperiode DT erfassten Messsignal V_SENS [n-1], dem aktuellen Messsignal V_SENS [n] und der Abtastperiode DT.

In einem Schritt S10 wird anschließend geprüft, ob der Betrag des Gradienten GRD_V_SENS des Messsignals V_SENS, größer ist als ein zweiter Schwellenwert GRD_V_SW. Der zweite Schwellenwert GRD_V_SW ist bevorzugt so gewählt, dass er charakteristisch ist für eine Flanke des Messsignals V_SENS beim Umschalten des Signalwertebereichs. Er ist dazu betragsmäßig so hoch gewählt, dass es sichergestellt werden kann, dass der die jeweilige Messgröße repräsentierende Anteil des Messsignals nicht derartigen schnellen zeitlichen Schwankungen unterliegen kann.

Ist die Bedingung des Schrittes S10 erfüllt, so wird in einem Schritt S12 einer Sensortypvariable S ein Multiplexwert MUX zugeordnet. Ist hingegen die Bedingung des Schrittes S10 nicht erfüllt, so wird der Sensortypvariable S ein Nicht-Multiplexwert NMUX zugeordnet. Damit ist das Erkennen des Sensortyps abgeschlossen und das Programm wird in einem Schritt S16 beendet.

Zusätzlich kann ein Zähler CTR vorgesehen sein, der jeweils um einen vorgegebenen Wert erhöht wird, wenn sowohl die erste Bedingung, also die Bedingung des Schrittes S6 als auch eine zweite Bedingung, also die Bedingung des Schrittes S10, erfüllt sind. Die Schritte S6 bis S10 werden dann mit einer zusätzlichen Schleife versehen und für eine vorgebbare Zeitdauer werden dann die Schritte S6 bis S10 zyklisch durchlaufen. Jedes Mal, wenn die Bedingung des Schrittes S10 erfüllt ist, wird dann der Zähler CTR erhöht. Die Zuordnung der Sensortypvariable S erfolgt dann nur, wenn der Zähler CTR einen vorgegebenen Maximalwert überschritten hat.

Gemäß Figur 3 wird ein Programm zum Verarbeiten des Messsignals V_SENS des Sensors 4 mit Signalwertebereich-Multiplexausgang in einem Schritt S20 gestartet, in dem gegebenenfalls Variablen initialisiert werden. In einem Schritt S22 wird geprüft, ob die Sensortypvariable S den Multiplexwert MUX hat. Ist dies nicht der Fall, so verharrt das Programm in einem Schritt S24 für die vorgegebene Wartezeitdauer T_W, bevor die Bedingung des Schrittes S22 erneut geprüft wird.

Ist die Bedingung des Schrittes S22 hingegen erfüllt, so wird in einem Schritt S26 erneut die erste Bedingung, wie in dem Schritt S6 geprüft. Ist die Bedingung des Schrittes S26 nicht erfüllt, so wird die Bearbeitung in einem Schritt S27 fortgesetzt, in dem das Programm für die vorgegebene Wartezeitdauer T_W verharrt, bevor erneut die Bedingung des Schrittes S26 geprüft wird.

Ist die Bedingung des Schrittes S26 hingegen erfüllt, so wird in einem Schritt S28 entsprechend dem Schritt S8 der Gradient GRD_V_SENS des Messsignals V_SENS ermittelt. Anschließend wird in einem Schritt S30 die zweite Bedingung entsprechend dem Schritt S10 geprüft. Ist die Bedingung des Schrittes S30 nicht erfüllt, so wird die Bearbeitung in dem Schritt S27 fortgesetzt.

Ist die Bedingung des Schrittes S30 hingegen erfüllt, so wird in einem Schritt S32 geprüft, ob der Gradient GRD_V_SENS des Messsignals V_SENS größer null ist. Dies ist gleich zu setzen einer Prüfung des Vorzeichens des Gradienten GRD_V_SENS des Messsignals V_SENS. Ist die Bedingung des Schrittes S32 erfüllt, so wird einer Kraftstofftemperatur TFU das vor zwei Abtastperioden DT erfasste Messsignal V_SENS [n-2] zugeordnet. Es wird somit in dem Schritt S34 die Kraftstofftemperatur TFU abhängig von dem Messsignal V_SENS [n-2], das vor zwei Abtastperioden DT erfasst wurde, ermittelt.

Ist die Bedingung des Schrittes S32 hingegen nicht erfüllt, so wird in einem Schritt S36 eine Kraftstoffqualität FQ abhängig von dem Messsignal V_SENS [n-2] ermittelt, das vor zwei Abtastperioden DT erfasst wurde. Je nach Ausgestaltung des Sensors 4 mit Signalwertebereich-Multiplexausgang können auch die Schritte S34 und S36 miteinander vertauscht sein. In diesem Ausführungsbeispiel ist beispielsweise der erste Schwellenwert V_SW bei 2,5 V gewählt. Messsignale, deren Wert größer als 2,5 V ist, repräsentieren in diesem Fall die Kraftstoffqualität FQ und Messsignale V_SENS, deren Wert kleiner als 2,5 V ist, repräsentieren die Kraftstofftemperatur TFU. Die Kraftstoffqualität FQ ist beispielsweise charakteristisch für den Anteil an Wasser in dem Kraftstoff oder an einem Anteil an Rapsmethylester.

Die in den Schritten S34 und S36 ermittelte Kraftstofftemperatur TFU und die Kraftstoffqualität FQ wird dann weiteren Funktionen in der Verarbeitungseinheit 12 zur Verfügung gestellt, so z.B. einer Funktion zum Ermitteln einer Einspritzzeitdauer für Kraftstoff in einem Brennraum eines Zylinders der Brennkraftmaschine.

Im Anschluss an die Bearbeitung der Schritte S34 oder S36 wird die Bearbeitung erneut in dem Schritt S24 fortgesetzt.

Bevorzugt ist ferner ein Zeitglied (ZG) vorgesehen, mittels dessen überwacht wird, ob die erste und die zweite Bedingung während einer vorgebbaren Zeitdauer erfüllt werden. Wird mittels des Zeitgliedes (ZG) erkannt, dass die erste und zweite Bedingung während der vorgebbaren Zeitdauer nicht erfüllt werden, so wird auf einen Fehler des Sensors (1) erkannt. Es können dann entsprechende Maßnahmen eingeleitet werden, wie z.B. im Falle einer Brennkraftmaschine gegebenenfalls ein Notlauf gesteuert werden oder eine entsprechende modifizierte Berechnung anderer Ausgangsgrößen von anderen Funktionen erfolgen.

## Patentansprüche

1. Verfahren zum Erkennen eines Sensortyps mit folgenden Schritten:
- eine erste Bedingung wird geprüft, die erfüllt ist, wenn ein Messsignal (V_SENS) eines Sensors (1) einen ersten Schwellenwert (V_SW) durchkreuzt,
- eine zweite Bedingung wird geprüft, wenn die erste Bedingung erfüllt ist, wobei die zweite Bedingung erfüllt ist, wenn ein Gradient (GRD_V_SENS) des Messsignals (V_SENS) betragsmäßig größer ist als ein vorgegebener zweiter Schwellenwert (GRD_V_SW),
- wenn die erste und die zweite Bedingung erfüllt sind, wird auf einen Sensor (4) mit einem Signalwertebereich-Multiplexausgang für das Messsignal (V_SENS) erkannt,
- und wenn mindestens eine der Bedingungen nicht erfüllt ist, so wird auf einen Sensor (2) ohne Signalwertebereich-Multiplexausgang für das Messsignal (V_SENS) erkannt.

2. Verfahren nach Anspruch 1,
bei dem jeweils die erste und zweite Bedingung zeitnah zu einer Aufnahme des Betriebs des Sensors (1) geprüft werden.

3. Verfahren nach einem der vorstehenden Ansprüche,
bei dem auf den Sensor (4) mit dem Signalwertebereich-Multiplexausgang für das Messsignal (V_SENS) erkannt wird, wenn die erste und zweite Bedingung eine vorgebbare Anzahl mal erfüllt sind, und ansonsten auf den Sensor (2) ohne Signalwertebereich-Multiplexausgang für das Messsignal (V_SENS) erkannt wird.

4. Verfahren nach einem der vorstehenden Ansprüche,
bei dem bei einem erkannten Sensor (4) mit Signalwertebereich-Multiplexausgang folgende Schritte durchgeführt werden:
- die erste und abhängig davon die zweite Bedingung werden geprüft,
- ein Messwert des Messsignals (V_SENS), der eine vorgebbare Zeitdauer vor dem Erfüllstein der ersten und zweiten Bedingung erfasst wurde, wird entweder einer ersten oder einer zweiten Messgröße zugeordnet und zwar abhängig von dem Vorzeichen des Gradienten (GRD_V_SENS) des Messsignals (V_SENS) oder abhängig von dem Absolutwert des Messwertes.

5. Verfahren nach Anspruch 4,
bei dem ein Fehler erkannt wird, wenn die erste und zweite Bedingung während einer vorgebbaren Zeitdauer nicht erfüllt sind.

## Claims

1. Method having the following steps for recognizing a sensor type:
- a first condition is checked that will have been met if a measuring signal (V_SENS) of a sensor (1) exceeds a first threshold (V_SW),
- a second condition will be checked if the first condition has been met, with the second condition having been met if a gradient (GRD_V_SENS) of the measuring signal (V_SENS) is greater in amount than a predefined second threshold (GRD_V_SW),
- if the first and second condition have been met, then a sensor (4) having a signal-value-range multiplex output for the measuring signal (V_SENS) will be recognized,
- and if at least one of the conditions has not been met, then a sensor (2) not having a signal-value-range multiplex output for the measuring signal (V_SENS) will be recognized.

2. Method according to claim 1
wherein the first and second condition are in each case checked close in time to a start of operation of the sensor (1).

3. Method according to one of the preceding claims
wherein the sensor (4) having the signal-value-range multiplex output for the measuring signal (V_SENS) will be recognized if the first and second condition have been met a predefined number of times, and otherwise the sensor (2) not having a signal-value-range multiplex output for the measuring signal (V_SENS).

4. Method according to one of the preceding claims
wherein the following steps are carried out in the case of a recognized sensor (4) having a signal-value-range multiplex output:
- the first and, dependent thereon, the second condition are checked,
- a measurement value of the measuring signal (V_SENS), which value was registered a predefinable period of time before the first and second condition were met, will be assigned to either a first or a second measured variable, and as a function, moreover, of the sign of the gradient (GRD_V_SENS) of the measuring signal (V_SENS) or as a function of the measurement value's absolute value.

5. Method according to claim 4
wherein a fault will be recognized if the first and second condition are not met during a predefinable period of time.

## Revendications

1. Procédé de reconnaissance d'un type de capteur comportant les étapes suivantes :
- une première condition est vérifiée, laquelle est remplie lorsqu'un signal de mesure (V_SENS) d'un capteur (1) croise une première valeur de seuil (V_SW),
- une seconde condition est vérifiée lorsque la première condition est remplie, la seconde condition étant remplie lorsque la valeur d'un gradient (GRD_V_SENS) du signal de mesure (V_SENS) est supérieure à une seconde valeur de seuil prédéfinie (GRD_V_SW),
- lorsque les première et seconde conditions sont remplies, la reconnaissance pour le signal de mesure (V_SENS) est effectuée sur un capteur (4) doté d'une sortie multiplex avec domaine de valeur de signal,
- et lorsqu'au moins une des conditions n'est pas remplie, la reconnaissance pour le signal de mesure (V_SENS) est effectuée sur un capteur (2) sans sortie multiplex avec domaine de valeur de signal.

2. Procédé selon la revendication 1,
pour lequel les première et seconde conditions sont vérifiées à peu d'intervalle du démarrage du fonctionnement du capteur (1).

3. Procédé selon l'une des revendications précédentes,
pour lequel la reconnaissance pour le signal de mesure (V_SENS) est effectuée sur le capteur (4) doté de la sortie multiplex avec domaine de valeur de signal (V_SENS), lorsque les première et seconde conditions sont remplies un nombre de fois pouvant être prédéfini, sans quoi la reconnaissance pour le signal de mesure (V_SENS) est effectuée sur le capteur (2) sans sortie multiplex avec domaine de valeur de signal.

4. Procédé selon l'une des revendications précédentes,
pour lequel les étapes suivantes sont réalisées sur un capteur reconnu (4) doté d'une sortie multiplex avec domaine de valeur de signal :
- la première condition, et en fonction de celle-ci la seconde condition, sont vérifiées,
- une valeur de mesure du signal de mesure (V_SENS), recensé sur une durée pouvant être prédéfinie avant que les première et seconde conditions ne soient remplies, est attribuée soit à une première, soit à une seconde grandeur de mesure, en fonction de la détermination du gradient (GRD_V_SENS) du signal de mesure (V_SENS) ou en fonction de la valeur absolue de la valeur de mesure.

5. procédé selon la revendication 4,
pour lequel une erreur est reconnue lorsque les première et seconde conditions ne sont pas remplies pendant une durée pouvant être prédéfinie.
